# EUROPEAN PATENT APPLICATION

(11) **EP 4 339 176 A1**
(43) Date of publication of application: **20.03.2024**
(21) Application number: 22806682.5
(22) Date of filing: 09.05.2022
(51) Int. Cl.: C04B 35/44, C04B 35/66, C04B 35/645

(54) **HIGH-PURITY COMPACT CALCIUM HEXA-ALUMINATE-BASED REFRACTORY MATERIAL AND PREPARATION METHOD THEREFOR**

(30) Priority: 10.05.2021 CN 202110507574
(71) Applicant: Zibo City Luzhong Refractories Co., Ltd., Zibo, Shandong 255138 (CN); The University of Science and Technology Beijing, Beijing 100083 (CN); Zibo Langfeng High Temperature Materials Co., Ltd., Zibo, Shandong 255138 (CN)
(72) Inventor: CHEN, Junhong, Beijing 100083 (CN); FENG, Jisheng, Zibo, Shandong 255138 (CN); JIA, Yuanping, Zibo, Shandong 255138 (CN); LI, Bin, Beijing 100083 (CN); ZHU, Bo, Zibo, Shandong 255138 (CN); LI, Guangqi, Beijing 100083 (CN); GUO, Yutao, Zibo, Shandong 255138 (CN)
(74) Representative: Lavoix
(86) International application number: PCT/CN2022/091663
(87) International publication number: WO 2022/237717

(57) **Abstract**

The present invention belongs to the technical field of refractory materials, and disclosed are a high-purity compact calcium hexa-aluminate-based refractory material, a preparation method therefor, and a working lining using the same. The mixing ratio is adjusted according to the chemical composition of the final product to contain raw materials containing CaO, Al₂O₃ and ZrO₂, the mixing ratio enabling the ratio of the chemical composition CaO:Al₂O₃:ZrO₂ calculated according to parts by mass to be 45.5-95.5%:2.0-8.4%:0-50%; and the chemical composition are placed into a high-temperature furnace and a mold for hot-pressing is carried out, the maximum temperature is 1550-1800°C, and the hot-pressing strength is 0.5-30MPa. In the present invention, when no sintering agent is added, a hot-pressing sintering process is employed according to a proportion to obtain a high-purity compact calcium hexa-aluminate-based refractory material, and the refractory material has excellent resistance to molten steel erosion and thermal shock stability, and can be widely applied in metallurgy, building materials and petrochemical industries as well as other industries. The preparation method is scientific and reasonable, product purity is high, and the prepared refractory material product can increase a device operation period; in addition, production costs are reduced, and energy-saving and emission-reducing effects are achieved.

## Description

### Technology Field

The present invention belongs to the technical field of refractory materials, in particular to a high-purity dense calcium hexa-aluminate refractory material, a preparation method thereof and a kiln lining using the refractory material.

### Background Art

At present, the lack of precise control of nonmetallic inclusions are common in high performance die steel, steel for silicon sheet cutting wire, steel for automobile gearbox and other high-end special steel and other ordinary steels, which affects the performance stability of steel. One of the main sources of nonmetallic inclusions in steel is refractory material which is in contact with molten steel almost all the time during steel-making. During iron and steel smelting process, the influence of ladle working lining refractory material on the quality of molten steel is critical important.

At present, there are two main types of ladle working lining refractory material: one is aluminum-magnesia carbon brick, the other is corundum-spinel-based castable or corundum-MgO-SiO₂-based castable (including prefabricated parts). These technologies have not been greatly improved and changed for at least 20 years.

Alumina-magnesia-carbon brick is mainly made of bauxite, corundum, magnesia, graphite and other raw materials. It has several shortcomings in molten steel smelting: one is to add carbon to steel, the other is to form deoxidized inclusion in molten steel due to the high oxygen potential of SiO₂ components. Although corundum-spinel castables do not contain carbon and will not add carbon to steel, the corundum corrosion resistance is so good that small particles of corundum may enter the steel in the form of fine particles without complete etching in the smelting state, forming alumina inclusions, or spinel inclusions, or CaO-MgO-Al₂O₃ inclusions with magnesium oxide, etc., which will affect the performance stability of steel; the corundum-MgO-SiO₂ castable or prefabricated part not only has the shortcomings of corundum-spinel castable, but also may lead to oxygen enrichment of SiO₂ when smelting ultra-low oxygen steel. Therefore, it is extremely important to develop refractory materials suitable for metallurgical industry that do not react with slag to generate non-metallic inclusions or do not increase endogenous inclusions and can clean steel, which has been explored at home and abroad.

The chemical composition of calcium hexa-aluminate (CaO •6Al₂O₃, abbreviated as CA6) is CaO and Al₂O₃, which has low oxygen potential and can meet the chemical stability under deoxidation conditions in the steel smelting. At the same time, its melting point is 1875 °C, its theoretical density is 3.79g/cm³, its thermal conductivity is small and its fire resistance is good. To some extent, as a refractory material, calcium hexa-aluminate has a certain role in cleaning the steel, which can significantly reduce the pollution of traditional refractory materials to molten steel.

However, calcium hexa-aluminate has a magnetoplumbite structure, which is anisotropic in crystal growth and development. The as-formed calcium hexa-aluminate crystal has a lamellar structure, so the sintering property of calcium hexa-aluminate is poor, which is the main reason of making it difficult to prepare calcium hexa-aluminate with volume density greater than 3.0 g/cm³ at present. In addition, during process of preparing calcium hexa-aluminate, the volume expansion effect accompanied by the reaction among each element also affects the sintering and densification process of calcium hexa-aluminate. The compactness of calcium hexa-aluminate is an important property to realize its application as working lining in the field of iron and steel metallurgy.

At present, in order to achieve densification of calcium hexa-aluminate, additives such as SiO₂ and TiO₂ are mostly used in the prior art to promote sintering, and then the liquid phase appears at high temperature to promote its densification and sintering. For example, Chen Zhaoyou and Chai Junlan discuss the physical and chemical properties of Bonite (trade name of calcium hexa-aluminate) in "calcium hexaaluminate material and its application in aluminum industrial furnaces (Chen Zhaoyou et al., calcium hexaaluminate material and its application in aluminum industrial furnaces [J]. Refractory materials, 2011,45 (2): 122 ~ 125.)", in which the chemical composition of SiO₂ is 0.9%. Another examples are "A preparation method of dense calcium hexa-aluminate refractory clinker and preparation method thereof(CN110171980A) " and "A dense calcium hexaaluminate refractory clinker and its preparation method " (CN105585314A), wherein TiO₂ and MnO are used as sintering agents, but this preparation method cannot achieve densification by controlling the stacking of atoms in the mirror layer and only relies on the liquid phase to narrow the distance between the grains. Although the density of calcium hexa-aluminate can be improved, the bulk density of calcium hexa-aluminate is barely highly than 3.15g/cm³. Moreover, the method of adding sintering additives to improve sintering activity is at the cost of sacrificing the high temperature performance of calcium hexa-aluminate, which will greatly reduce the high temperature performance of the material(although the amount of addition is less than 1%, it will produce several times of liquid phase produced at high temperature). At the same time, due to the introduction of high oxygen potential impurities, it is not conducive to the inclusion control in steel.

In addition to the above shortcomings, refractory materials based on calcium hexa-aluminate raw material with sintering additives also have problems such as high apparent porosity (the material's apparent porosity is generally 15∼23%, resulting in uneven organizational structure of the refractory material ), and poor corrosion resistance. The damage rate of calcium hexa-aluminate refractory material is very fast under the condition of high porosity and high addition of sintering additives. There will be more refractory materials entering into the molten steel. The refractory material mixture corroded and washed away by molten steel and slag not only has a certain effect of cleaning molten steel in some cases, but also will lead to large non-metallic inclusions if it is not well controlled, which will seriously affect the quality of steel. At present, the aluminum-magnesia-carbon brick and corundum spinel castable used for many years on the working lining of refining ladle are also damaged quickly due to the high apparent porosity (generally 13-20%), which leads to a large number of refractory materials entering the slag and molten steel. However, in terms of the current development concept and the existing preparation methods of refractory material, it is difficult to reduce the porosity (including apparent porosity and partially closed porosity), but the apparent porosity has a very obvious adverse effect on the material life and corrosion resistance.

Therefore, based on the advantages of calcium hexa-aluminate in chemical composition, it is very important for the production of high-end quality steel and the reduction of inclusions in steel, as well as for the smelting of molten aluminum containers that how to greatly improve the density of materials, improve the uniformity of organizational structure of materials, reduce the amount of refractory material entering molten steel due to corrosion and erosion of molten steel and slag, improve the purity of materials, enhance the high-temperature performance, and reduce the introduction of high-oxygen sintering additives to minimize the pollution to molten steel.

The difficulties for solving the above problems and defects are as follows :(1) in the prior art, both aluminum-magnesium-carbon and corundum-spinel series castables in use have the defects of uneven organizational structure, high apparent porosity (oxidation of carbon-containing components also leads to high porosity) and rapid damage, which may affect inclusions in steel, but can not greatly reduce porosity and improve the uniformity of organizational structure; (2) the existing production technologies of calcium hexa-aluminate is basically to add TiO₂, MnO, SiO₂, etc. as sintering agents, all at the expense of the high-temperature performance of materials, which not only greatly reduces the high-temperature performance of materials, but also introduces additives with high oxygen potential, thus increasing harmful components in calcium hexa-aluminate with low oxygen potential and no pollution to molten steel; (3), the bulk density of calcium hexa-aluminate raw materials in the prior art can't reach above 3.15g/cm³, while the bulk density of pure calcium hexa-aluminate refractory materials (CA6 phase is ≥90%) based on this raw material can only reach 2.50~2.85g/cm³, and the apparent porosity can even be as high as 22∼25%, so the organizational structure is very uneven, and its damage speed can be imagined. Moreover, due to the difficulty of sintering, the high-purity and dense calcium hexa-aluminate raw materials reported in the literature have not been produced on a large scale, and there is no large-scale production of dense calcium hexa-aluminate refractory materials..

The significance of solving the above problems and defects is as follows: in the case of not adding sintering agent, the calcium hexa-aluminate refractory material with high purity, uniform organizational structure and relatively dense can be prepared, which can give full play to the advantages of calcium hexa-aluminate refractory material in chemical composition, at the same time give it excellent performance to resist the corrosion of molten steel, reduce the pollution of molten steel, clean steel quality, and have significant economic and social economic benefits .

### Summary of the invention

In order to solve the problems existing in the prior part, this application provides a high-purity dense calcium hexa-aluminate system refractory material, a preparation method thereof and a kiln lining using the high-purity dense calcium hexa-aluminate system refractory material.

The high-purity dense calcium hexa-aaluminate system refractory material in the application do not need add any sintering agents in the preparation process and acalcium hexa-aaluminate system refractory material with high chemical purity, dense structure, good uniformity and high thermal shock stability can be prepared by using the hot-pressed sintering process..

The specific technical solutions of this application are as follows:
1. A high-purity dense calcium hexa-aluminate system refractory material, wherein the phase of the refractory material comprises CA6 and one or two selected from corundum and zirconia.
2. The refractory material according to item 1, wherein based on the percentage of the total mass of the refractory material, the total phase content of CA6 and one or two selected from corundum and zirconia is ≥90 %; preferably
   the phase content of CA6 is 30-100%, preferably 35-100%;
   the phase content of corundum is 0-50%, preferably 0-35%; and
   the phase content of zirconia is 0-50%, preferably 0-35%.
3. The refractory material according to item 1 or 2, wherein based on the percentage of the total mass of the refractory material, the content of the sintering-promoting component in the refractory material is ≤1.5%, preferably ≤1.0%.
4. The refractory material according to any one of items 1-3, wherein the chemical composition of the refractory material comprises Al₂O₃, CaO and ZrO₂, and based on the percentage of the total mass of the refractory material, the Al₂O₃ is 45.8-95.8%, preferably 59.54-94.54%; the CaO is 2.52-8.40%, preferably 2.94-8.40%; and the ZrO₂ is 0-50%, preferably 0-35%.
5. The refractory material according to any one of items 1-4, wherein the bulk density of the refractory material is 2.90-3.65 g/cm³, preferably 2.90-3.45 g/cm³, more preferably 2.95-3.30 g/cm³.
6. The refractory material according to any one of items 1-5, wherein the refractory material is prepared by a method comprising the following steps:
   mixing related fine powders to obtain a mixed material, then subjecting the mixed material to hot-pressed sintering to obtain the refractory material.
7. The refractory material according to item 6, wherein the mass ratio of the fine powder in the mixture is 100%.
8. The refractory material according to any one of items 6-7, wherein the fine powder comprises Al₂O₃-CaO system fine powder and ZrO₂-containing fine powder, preferably based on the percentage of the total mass of the fine powder, the Al₂O₃-CaO system fine powder is 50-100%, and the ZrO₂-containing fine powder is 0-50%;
   preferably the Al₂O₃-CaO system fine powder is selected from: CA6 fine powder containing CaO fine powder, or a mixed powder of CaO-containing fine powder and Al₂O₃-containing fine powder;
   preferably the Al₂O₃-containing fine powder is one or two or more selected from the group consisting of: active α-Al₂O₃ fine powder, γ-Al₂O₃ fine powder, ρ-Al₂O₃ fine powder, aluminum hydroxide fine powder, industrial alumina fine powder, white corundum fine powder, sub-white corundum fine powder, sintered corundum fine powder, and tabular corundum fine powder;
   preferably the CaO-containing fine powder is one or two or more selected from the group consisting of: quicklime fine powder, limestone fine powder, calcium hydroxide fine powder, CA fine powder, CA2 fine powder, C12A7 fine powder, and CA6 fine powder;
   preferably the ZrO₂-containing fine powder is one or two or more selected from the group consisting of: monoclinic zirconia fine powder, tetragonal zirconia fine powder, desiliconized zirconium fine powder, and fused zirconia fine powder.
9. The refractory material according to any one of items 6-8, wherein the particle size of the fine powder is ≤0.088mm.
10. The refractory material according to any one of items 6-9, wherein the hot-pressed sintering is performed by
   putting the mixed material into a mold of a high temperature device for hot-pressed sintering; or
   pre-sintering the mixed material at low temperature, and then putting it into a mold of a high temperature device for hot-pressed sintering; or
   mixing part of the materials to pre-sinter the mixture at low temperature, then crushing it to mix well with the other remaining material to obtain a mixed material, and then putting the mixed material into a mold of a high temperature device for hot-pressed sintering.
11. The refractory material according to item 10, wherein the temperature of the hot-pressed sintering is 1550-1800°C; preferably the strength of the hot-pressed sintering is 0.5-30 MPa.
12. A preparation method for high-purity dense calcium hexa-aluminate system refractory material, comprising the following steps:
   mixing related fine powders to obtain a mixed material, then subjecting the mixed material to hot-pressed sintering to obtain the refractory material.
13. The preparation method according to item 12, wherein the mass ratio of the fine powder in the mixture is 100%.
14. The preparation method according to items 12-13, wherein the fine powder comprises Al₂O₃-CaO system fine powder and ZrO₂-containing fine powder, preferably based on the percentage of the total mass of the fine powder, the Al₂O₃-CaO system fine powder is 50-100%, and the ZrO₂-containing fine powder is 0-50%;
   preferably the Al₂O₃-CaO system fine powder is selected from: CA6 fine powder containing CaO fine powder, or a mixed powder of CaO-containing fine powder and Al₂O₃-containing fine powder;
   preferably the Al₂O₃-containing fine powder is one or two or more selected from the group consisting of: active α-Al₂O₃ fine powder, γ-Al₂O₃ fine powder, ρ-Al₂O₃ fine powder, aluminum hydroxide fine powder, industrial alumina fine powder, white corundum fine powder, sub-white corundum fine powder, sintered corundum fine powder, and tabular corundum fine powder;
   preferably the CaO-containing fine powder is one or two or more selected from the group consisting of: quicklime fine powder, limestone fine powder, calcium hydroxide fine powder, CA fine powder, CA2 fine powder, C12A7 fine powder, and CA6 fine powder;
   preferably the ZrO₂-containing fine powder is one or two or more selected from the group consisting of: monoclinic zirconia fine powder, tetragonal zirconia fine powder, desiliconized zirconium fine powder, and fused zirconia fine powder.
15. The preparation method according to any one of items 12-14, wherein the particle size of the fine powder is ≤0.088mm.
16. The preparation method according to any one of items 12-15, wherein the hot-pressed sintering is performed by
   putting the mixed material into a mold of a high temperature device for hot-pressed sintering; or
   pre-sintering the mixed material at low temperature, and then putting it into a mold of a high temperature device for hot-pressed sintering; or
   mixing part of the materials to pre-sinter the mixture at low temperature, then crushing it to mix well with the other remaining material to obtain a mixed material, and then putting the mixed material into a mold of a high temperature device for hot-pressed sintering.
17. The preparation method according to item 16, wherein the temperature of the hot-pressed sintering is 1550-1800°C; preferably the strength of the hot-pressed sintering is 0.5-30 MPa.
18. A working lining of a ladle for molten steel smelting, wherein it comprises the refractory material according to any one of items 1-11 or the refractory material prepared by the preparation method according to any one of items 12-17.
19. A working lining for molten aluminum smelting and transporting ladles, wherein it comprises the refractory material according to any one of items 1-11 or the refractory material prepared by the preparation method according to any one of items 12-17.
20. A refractory lining for industrial furnaces, wherein it comprises the refractory material according to any one of items 1-11 or the refractory material prepared by the preparation method according to any one of items 12-17.

### Effect of the invention

Compared with the prior art, the application has the advantages and positive effects as follows:
(1) the refractory material provided by the application has a main phase of CA6, Al₂O₃, and ZrO₂, the content of CA6+Al₂O₃+ZrO₂ is≥90%, SiO₂, TiO₂, and other impurities are less, the purity is significantly higher than that of other existing calcium hexa-aluminate refractory materials, the impact on high-end steel inclusions is much better, the sensitivity to some atmospheres is also greatly reduced, and the universality in some application fields increases; its bulk density is 2.90~ 3.65g /cm³, which is much higher than the existing calcium hexa-aluminate refractory material of the same grade; the corrosion resistance of molten steel and slag is greatly enhanced, not only the service life will be greatly improved, but also the refractory material entering the molten steel is also greatly reduced, which is greatly conducive to the cleanliness of the quality of molten steel, and can be widely used in the metallurgical industry. It can also be widely used in cement kiln transition belt and other rotary kiln lining and masonry of some industrial kilns, which can increase the operation cycle of equipment, reduce production costs, save energy and reduce emission.
(2) As for the preparation method provided in this application, the selected raw materials ars simple and rich in sources; without adding sintering agent, good sintering of calcium hexa-aluminate refractory material can be achieve with the help of hot-pressed sintering process; this method is scientific and reasonable, and has significant economic benefits.
(3) According to the preparation method provided in this application, the prepared calcium hexa-aluminate system material is dense and high in purity. The main phase content is CA6+ corundum + zirconia >90%, and its bulk density is as high as 2.90-3.65 g/cm³, which can give full play to the excellent properties of calcium hexa-aluminate refractory material.
(4) The high-purity dense calcium hexa-aluminate refractory material of the present application can be widely used in steel making working lines, such as working lining of ladle of external refining, etc., and has good corrosion resistance; the impact of inclusions in steel is significantly better than that of the existing corundum, spinel and many other refractory materials, which greatly reduces the impact of refractory materials on molten steel during the smelting process of high-end special steel, improves the overall quality of high-end special steel in China's metallurgical industry, can increase the operation cycle of equipment, improve economic benefits, and have significant social benefits.
(5) The high-purity dense calcium hexa-aluminate refractory material of the present application can also be widely used in the refractory lining of rotary kiln, such as the transition zone of cement rotary kiln, etc., and has good corrosion resistance and low thermal conductivity; its performance is significantly better than that of the existing silicon mulite brick, magnesia alumina spinel brick and many other refractory materials, which can increase the operation cycle of equipment, reduce heat loss, and improve economic benefits.
(6) The high-purity dense calcium hexa-aluminate refractory material can also be widely used in the masonry of industrial kilns under the conditions of high temperature, reducing atmosphere and alkaline atmosphere erosion, such as the petrochemical cracking furnace, etc., and has good erosion resistance and low thermal conductivity, and its performance is significantly better than that of the existing corundum brick and many other refractory materials, which can increase the operation cycle of equipment, reduce heat loss and improve economic benefits.

### Brief description of drawings

In order to more clearly explain the technical solution of this application,the drawings used in this application will be briefly introduced below. It is obvious that the drawings described below are only some embodiments of this application. For ordinary people skilled in the field, other drawings can be obtained from these drawings without creative work.
Fig. 1 shows the fired product of the high purity dense calcium hexa-aluminate system refractory material of the present application.
Fig. 2 shows the damage status of sample 3 casted according to Example 1 of CN107500747 after test.
Fig. 3 shows the damage effect of the high-purity dense calcium hexa-aluminate system refractory material sample after test.

### Detailed description of the invention

In combination with the attached drawings and specific examples, this application is further described in detail below. It should be understood that this application may be implemented in various forms and should not be limited by the embodiments set forth herein. Instead, these embodiments are provided to enable a more thorough understanding of the application, and will full convey the scope of the application to those skilled in the art.

It should be noted that certain terms are used in the specification and claims to refer to specific components. It should be understood by those skilled in the art that they may use different terms to refer to the same component. This specification and claims do not use differences in nouns as a way of distinguishing components, but rather use differences in function of components as a criterion for distinguishing components. The words "comprises" or "includs" mentioned throughout the entire specification and claims are open-ended term, they should be interpreted as "including but not limited to". The subsequent description of the specification is a preferred embodiment for implementing this application, however, the description is for the purpose of the general principles of the specification and is not intended to limit the scope of this application. The scope of protection in this application shall be as defined by the attached claims.

The present application provides a high-purity dense calcium hexa-aluminate system refractory material, wherein the phase of the refractory material comprises CA6 and one or two selected from corundum and ZrO₂.

"Phase" in this application is a phase with specific physical and chemical properties in a substance.

In a specific embodiment, the phase of the refractory material comprises CA6 and corundum; in a specific embodiment, the phase of the refractory material comprises CA6 and ZrO₂; in a specific embodiment, the phase of the refractory material comprises CA6, corundum and ZrO₂.

"CA6" in this application is the abbreviation of calcium hexa-aluminate, its structural formula is CaO·6Al₂O₃ with melting point of 1875°C, and theoretical density of 3.79g/cm³; The characteristics of the material are: good stability at low oxygen partial pressure; lamellar stack structure, crystal growth anisotropy, slow growth rate in the C-axis and difficult to sinter; when reacting with slag, CA2(short for CaO·2Al₂O₃), CA(short for CaO·Al₂O₃), etc. are generated; at the steelmaking temperature, CA₂ is solid and CA is liquid, then the solid-liquid mixed phase blocks the pored and inhibits the slag penetration.

The phase of the refractory material is determined by XRD, for example by grinding the measured material to below 325 mesh and then scanning with an X-ray diffractometer. By analyzing the diffraction data and matching it with the standard PDF card, the correlation phase is obtained, and then the content of the correlation phase is obtained by fitting the diffraction data.

As for ZrO₂ phase, H_{f}O₂ and ZrO₂ are symbiotic and difficult to separate, and the crystal type is similar, therefore,
①in this application, the phase content of ZrO₂ comprises the phase content of H_{f}O₂;
(2) due to differences in temperature, process and other aspects, and the uniform distribution of components (it is impossible to achieve absolute uniformity), ZrO₂-CaO solid solution, CaO·ZrO₂ and other phases may appear in the final product. In the case of ZrO₂-CaO solid solution, CaO·ZrO₂ and other phases, the ZrO₂ content is first corrected by combining the XRF results, and then the corrected ZrO content is converted to the zirconia phase, and it will be solidated or CaO·ZrO₂. The CaO which is solid-solution or combined in the form of CaO·ZrO₂ is converted into CA₆, then all these phases are normalized to 100%, and finally the percentage of each phase is calculated.

In a specific embodiment, the refractory material of this application, based on the percentage of the total mass of the refractory material, the total phase content of CA6 and one or two selected from corundum and ZrO₂ of the refractory is ≥90%; For example, based on the percentage of the total mass of the refractory material, the total phase content in the refractory material can be 90%, 91%, 92%, 93%, 94%, 95%, 96%, 97%, 98%, 99%, 100%, etc.

In a preferred embodiment, the refractory material of this application, based on the percentage of the total mass of the refractory material, the phase content of CA6 is 30-100%, preferably 35-100%;
the phase content of corundum is 0-50%, preferably 0-35%;
the phase content of ZrO₂ is 0-50%, preferably 0-35%.

In a specific embodiment, the refractory material of this application, based on the percentage of the total mass of the refractory material, the content of the sintering-promoting component in the refractory material is ≤1.5%, preferably ≤1.0%.

For example, based on the percentage of the total mass of the refractory material, the content of the sintering-promoting component in the refractory material may be 1.5%, 1.4%, 1.3%, 1.2%, 1.1%, 1.0%, 0.9%, 0.8%, 0.7%, 0.6%, 0.5%, 0.4%, 0.3%, 0.2%, 0.1%, 0% or any range between them.

The promoting-sintering component is SiO₂, TiO₂, Fe₂O₃, and R₂O. Due to the low content of promoting-sintering components, the chemical composition of the material system is high in purity, wherein R₂O refers to the oxide of the alkali metal.

In a specific embodiment, the refractory material of the present application, its chemical composition comprises Al₂O₃, CaO and ZrO₂; based on the percentage of the total mass of the refractory material, in the chemical composition of the refractory material:
the Al₂O₃ is 45.8-95.8%, preferably 59.54~94.54%, for example, Al₂O₃ can account for 45.8%, 60%, 65%, 70%, 75%, 80%, 85%, 90%, 95%, 95.8% of the total mass of the refractory material or any range between them;
the CaO is 2.52-8.40%, preferably 2.94-8.40%, for example, CaO can account for 2.52%, 3%, 3.5%, 4%, 4.5%, 5%, 5.5%, 6%, 6.5%, 7%, 7.5%, 8%, 8.4% of the total mass of the refractory material or any range between them;
the ZrO₂ is 0∼50%, preferably 0~ 35%, for example, ZrO₂ can be 0%, 5%, 10%, 15%, 20%, 25%, 30%, 35%, 40%, 45%, 50% or any range between them.

The chemical composition of the refractory material is determined by fluorescence analysis, i.e. XRF, in accordance with GB/T21114-2007.

As for the content of ZrO₂ in the chemical composition, because H_{f}O₂ and ZrO₂ are symbiotic, and it is difficult to separate, therefore in the XRF of this application, the content of H_{f}O₂ is calculated in the content of ZrO₂.

In a specific embodiment, the bulk density of the refractory material of the present application is 2.90-3.65 g/cm³ preferably 2.90-3.45 g/cm³, more preferably 2.95-3.30 g/cm³.

For example, the bulk density of the refractory material may be 2.90 g/cm³, 2.91 g/cm³, 2.92 g/cm³, 2.93 g/cm³, 2.94 g/cm³, 2.95 g/cm³, 2.96 g/cm³, 2.97 g/cm³, 2.98 g/cm³, 2.99 g/cm³, 3.00 g/cm³, 3.05 g/cm³, 3.10 g/cm³, 3.15 g/cm³, 3.20 g/cm³, 3.25 g/cm³, 3.30 g/cm³, 3.35 g/cm³, 3.40 g/cm³, 3.45 g/cm³, 3.50 g/cm³, 3.55 g/cm³, 3.60 g/cm³, 3.65 g/cm³ or any range in between.

The bulk density of the refractory material is determined in accordance with GB/T2997-2000.

In a specific embodiment, the refractory material of the present application is prepared by a method comprising the following steps:
mixing related fine powders to obtain a mixed material, then subjecting the mixed material to hot-pressed sintering to obtain the refractory material.

The fine powder refers to the part passing through the 180-mesh square hole sieve (Xinxiang Zhongtuo Machinery Equipment Co., LTD.), that is, the part under the screen of the 180-mesh square hole sieve, and its particle size is ≤180 mesh, that is, the particle size is ≤0.088mm.

In one specific embodiment, the mass ratio of fine powder in the mixed material is 100%.

In a specific embodiment, the fine powder comprises Al₂O₃-CaO system fine powder and ZrO₂-containing fine powder and in a preferred specific embodiment, based on the percentage of the total mass of the fine powder; the Al₂O₃-CaO fine powder is 50-100%, for example it can be 50%, 55%, 60%, 65%70%75%, 80%, 85%, 90%, 95%, 100% or any range in between; and the ZrO₂-containing fine powder is 0-50%, for example, it can be 0%, 5%, 10%, 15%, 20%, 25%, 30%, 35%, 40%, 45%, 50% or any range in between.

In a preferred embodiment, the Al₂O₃-CaO system fine powder in this application is selected from CA6 fine powder containing CaO fine powder, or a mixed powder of CaO-containing fine powder and Al₂O₃-containing fine powder.

"CaO-containing fine powder" in this application means a fine powder whose chemical composition comprises a CaO component, or CaO and Al₂O₃.

The terms "Al₂O₃-containing fine powder" in the present application means alumina system fine powder whose chemical composition is mainly Al₂O₃.

In a preferred embodiment, said Al₂O₃-containing fine powder is selected from the group consisting of: active α-Al₂O₃ powder, γ-Al₂O₃ powder, ρ-Al₂O₃ powder, aluminum fine powder, industrial aluminum fine powder, white corundum fine powder, sub-white corundum fine powder, sintered corundum fine powder, and tabular corundum fine powder.

The "active α-Al₂O₃ fine powder" in this application is an alumina powder with high activity (which is mainly α-Al₂O₃), obtained by treating industrial alumina or aluminum hydroxide as a raw material at 1250-1450°C.

The "γ-Al₂O₃ fine powder" in this application is an alumina powder with a high specific surface area and good adsorption properties, obtained by treating aluminum hydroxide as a raw material.

The "ρ-Al₂O₃ fine powder" in this application is an alumina powder with a certain degree of hydration bonding, obtained by rapid treatment of aluminum hydroxide at 600-900°C.

The "industrial alumina fine powder" in this application is a mineral whose main component is α-Al₂O₃, which is prepared by calcining aluminum hydroxide as raw material at 900-1250°C.

The "white corundum fine powder" in this application is an alumina raw material with an alumina trioxide (Al₂O₃) content of 97.5% or more, prepared by electric melting of industrial alumina as raw material, and comprises a small amount of iron oxide, silicon oxide, and other components, and is white in color.

The "sub-white corundum fine powder" in this application is produced from bauxite as a raw material. Because its chemical composition and physical properties are close to those of white corundum, it is called sub-white corundum. The product with the hardness of white corundum and the toughness of brown corundum, is an ideal high-grade refractory material and grinding material.

The "sintered corundum fine powder" in this application refers to a refractory clinker made from alumina as raw material, finely ground into pellets or billets, and sintered at 1750-1900 °C. It has a high bulk density, low porosity, and excellent thermal shock resistance and slag erosion resistance at high temperatures.

The "tabular alumina fine powder" in this application has a coarsely crystallized and well-developed α-Al₂O₃ crystal structure, with an Al₂O₃ content of over 97.0%. It has a tabular crystal structure with small pores and many closed pores.

In a preferred embodiment, the CaO-containing fine powder is one or two or more selected from the group consisting of: quicklime fine powder, limestone fine powder, calcium hydroxide fine powder, CA fine powder, CA2 fine powder, C12A7 fine powder, and CA₆ fine powder.

The "quicklime fine powder" in this application is mainly composed of calcium oxide. It is usually prepared by calcining natural rocks, which are mainly composed of calcium carbonate, at high temperatures to decompose and generate carbon dioxide and calcium oxide (chemical formula: CaO, also known as quicklime, or marble).

The "CA fine Powder" in this application means a fine powder whose main component is CaO • Al₂O₃.

The "CA2 fine powder" in this application means a fine powder whose main component is CaO·2Al₂O₃.

The "C12A7 fine powder" in this application means a fine powder whose main component is 12CaO·7Al₂O₃.

The "CA6 fine powder" in this application means a fine powder whose main component is CaO·6Al₂O₃.

In a preferred embodiment, the ZrO₂-containing fine powder is one or two or more selected from the group consisting of: monoclinic zirconia fine powder, tetragonal zirconia fine powder, desiliconized zirconium fine powder, and fused zirconia fine powder.

The "monoclinic zirconia fine powder" in this application refers to a zirconia fine powder whose crystal form is monoclinic system.

The "tetragonal zirconia fine powder" in this application refers to a zirconia fine powder whose crystal form is tetragonal system.

In this application, the "desiliconized zirconium fine powder" refers to the a zirconia fine powder obtained by desiliconizing zircon sand.

In this application, the "fused zirconia fine powder" refers to a zirconia fine powder prepared by arc melting with zirconia powder.

In one specific embodiment, the particle size of the fine powder in the mixed material is ≤0.088mm.

In a specific embodiment, the refractory material can be prepared by three hot-pressed sintering methods.

The hot-pressed sintering refers to a way to achieve material sintering and preparation under the combined action of applying pressure and temperature.

In a specific embodiment (Method 1), the hot-pressed sintering method is to put a mixed material into a mold of a high temperature device for hot-pressed sintering.

For the method of putting the mixed material into a mold of a high temperature device, it means that the raw material fine powder is mixed according to the preset mass ratio and then put into a mold of the high temperature device for heating; When the temperature is raised to the highest temperature, the pressure is applied to achieve sintering, or the pressure and the temperature are kept for a certain time to complete the hot-pressed sintering of the material; or the mixed material is put into a mold of a high temperature device, and when the temperature is raised to a certain temperature and the pressure is applied; then the temperature is gradually raised while the applied pressure is increased until the temperature reaches a highest temperature and the pressure reaches a maximum value, or the temperature and the pressure are continuously held for a certain time to complete the hot-pressed sintering of the material; or the mixed material is put into a mold of a high temperature device, the temperature is increased while the pressure applied on the mixed material is gradually increased until the temperature reaches a highest temperature, and the pressure reaches a maximum value, or the temperature and the pressure are continuously held for a certain time to complete the hot-pressed sintering of the material.

In another specific embodiment (Method 2), the hot-pressed sintering method is to pre-sintering the mixed material at low temperature (i.e. fully pre-synthesized), and then put into a mold of a high temperature device for hot-pressed sintering.

For the above method of pre-synthesizing of all the mixed material and then hot-pressed sintering, it means that all the raw material fine powder is mixed according to the preset mass ratio and then pressed and molded at normal temperature, then lightly calcined and synthesized at the temperature of 1400-1600C to obtain a pre-synthetic material, and then the pre-synthetic material is put into a mold of a high-temperature device for hot-pressed molding and sintering according to the hot-pressed sintering method of method 1.

In another specific embodiment (Method 3), the hot-pressed sintering method is to first mix part of the raw materials to pre-sinter the mixture at low temperature (that is, partial pre-synthesized), then crushed to mix well with other remaining raw materials to obtain a mixed material, and then put into a mold of a high temperature device for hot-pressed sintering.

For the above-mentioned method of pre-synthesizing of part of the mixture and then hot-pressed sintering with the remaining raw materials, it means that part of the fine powder of the raw materials is mixed first, pressed and molded at room temperature, and lightly calcined and synthesized at the temperature of 1400-1600°C to a a pre-synthetic material. After the pre-synthetic material is crushed, the remaining fine powder of the raw material is added to the preset mass ratio and mixed evenly to obtain a mixed material; then the mixed material is put into a mold of a high-temperature device for hot-pressed sintering according to the hot-pressed sintering method of method 1.

In a specific embodiment, when the refractory material of this application is prepared by hot-pressed sintering, the high temperature device is a high temperature device commonly used by technicians in the field, such as a high temperature furnace; or a kiln that integrates high temperature and hot pressing, such as a hot-pressed furnace.

In a specific embodiment, when the refractory of the present application is prepared by hot-pressed sintering, the temperature of the hot-pressed sintering is 1550-1800°C, for example, it may be 1550°C, 1600C, 1650°C, 1700°C, 1750°C, 1800°C or any range in between; the strength of the hot-press sintering is 0.5-30MPa, for example, it can be 0.5MPa, 1MPa, 1.5MPa, 2MPa, 2.5MPa, 3MPa, 3.5MPa, 4MPa, 4.5MPa, 5MPa, 5.5MPa, 6MPa, 6.5MPa, 7MPa, 7.5MPa, 8MPa, 8.5MPa, 9MPa, 9.5MPa, 10MPa, 10.5MPa, 11MPa, 11.5MPa, 12MPa, 12.5MPa, 13MPa, 13.5MPa, 14MPa, 14.5MPa, 15MPa, 20MPa, 25MPa, 30MPa or any range in between.

The strength of the hot-pressed sintering refers to the pressure value applied to the specimen per unit area.

The present application also provides a preparation method for a high-purity dense calcium hexa-aluminate refractory material, which comprises the following steps:
mixing related fine powders to obtain a mixed material, then subjecting the mixed material to hot-pressed sintering to obtain the refractory material.

In a specific embodiment, in the preparation method of t high-purity dense calcium hexa-aluminate system of the present application, the mass ratio of fine powder in the mixed material is 100%.

Specifically, the fine powder refers to a part passing through the 180-mesh square hole sieve, that is, the part under the screen of the 180-mesh square hole sieve, and its particle size is % 0088mm.

In a specific embodiment, in the preparation method of the high-purity dense calcium hexa-aluminate refractory material, the fine powder comprises Al₂O₃-CaO system fine powder and ZrO₂-containing fine powder; preferably, based on the percentage of the total mass of the fine powder, the Al₂O₃-CaO system fine powder is 50-100%, and the ZrO₂-containing fine powder is 0-50%;

In a preferred embodiment, the Al₂O₃-CaO system fine powder is selected from CA6 fine powder containing CaO fine powder, or a mixed powder of CaO-containing fine powder and Al₂O₃-containing fine powder.

In a preferred embodiment, the Al₂O₃-containing fine powder is one or two or more selected from the group consisting of: active α-Al₂O₃ powder, γ-Al₂O₃ powder, ρ-Al₂O₃ powder, aluminum hydroxide fine powder, industrial aluminum oxide fine powder, white corundum fine powder, sub-white corundum fine powder, sintered corundum fine powder, and tabular corundum fine powder.

In a preferred embodiment, the CaO-containing fine powder is one or two or more selected from the group consisting of: quicklime fine powder, limestone fine powder, calcium hydroxide fine powder, CA(CaO·Al₂O₃)fine powder, CA2(CaO·2Al₂O₃)fine powder, C12A7(12CaO·7Al₂O₃)fine powder, and CA6(CaO·6Al₂O₃) fine powder.

In a preferred embodiment, the ZrO₂-containing fine powder is one or two or more selected from the group consisting of: monoclinic zirconia fine powder, tetragonal zirconia fine powder, desiliconized zirconium fine powder and fused zirconia fine powder.

In a specific embodiment, in the preparation method of the high-purity dense calcium hexa-aluminate refractory material, three hot-pressed sintering methods can be adopted, comprising:
putting the mixed material into a mold of a high temperature device for hot-pressed sintering; or
pre-sintering the mixed material at low temperature, and then putting it into a mold of a high temperature device for hot-pressed sintering; or
mixing part of the materials to pre-sinter the mixture at low temperature, then crushing it to mix well with the other remaining material to obtain a mixed material, and then putting the mixed material into a mold of a high temperature device for hot-pressed sintering

In one specific embodiment, the temperature of the hot-pressed sintering is 1550-1800°C; preferably, the strength of the hot-pressed strength is 0.5-30MPa.

In a preferred embodiment, the high-purity dense calcium hexa-aluminate refractory material can be prepared by the following methods and steps:
(1) evenly mixing CaO-containing raw material, Al₂O₃-containing raw material, and ZrO₂-containing raw material according to the mixing ratio, wherein the mixing ratio is that the ratio of the chemical compositions Al₂O₃: CaO: ZrO₂ is 45.8 - 95.8%:2.52-8.4% : 0-50% according to the calculating in parts by mass;
(2) putting the mixed raw materials into a mold of a high-temperature device for hot-pressed molding and sintering, the highest temperature is 1550~1800°C, and the strength of the hot-pressed sintering is 0.5-30 MPa.

In another preferred embodiment, the high-purity dense calcium hexa-aluminate refractory material can be prepared by the following methods and steps:
(1) evenly mixing CaO-containing raw material, Al₂O₃-containing raw material, and ZrO₂-containing raw material according to the mixing ratio, wherein the mixing ratio is that the ratio of the chemical compositions Al₂O₃: CaO: ZrO₂ is 45.8 - 95.8%:2.52-8.4% : 0-50% according to the calculating in parts by mass;
(2) molding the mixed raw material at normal temperature and then lightly sintering at 1400-1600°C for synthesis to obtain a pre-synthetic material;
(3) crushing the pre-synthetic material and putting it into a mold of a high-temperature device for hot-pressed molding and sintering, the highest temperature is 1550~1800°C, and the strength of the hot-pressed sintering is 0.5-30 MPa.

In another preferred embodiment, the high-purity dense calcium hexa-aluminate refractory material can be prepared by the following methods and steps:
(1) evenly mixing part of the CaO-containing raw material, Al₂O₃-containing raw material and ZrO₂-containing raw material;
(2) molding the mixed raw material at room temperature and then lightly sintering and synthesizing at 1400-1600 °C to obtain a pre-synthetic material;
(3) crushing the pre-synthetic material, evenly mixting it with the other remaining CaO-containing raw material, Al₂O₃-containing raw material and ZrO₂-containing raw material, and the mixing ratio of all raw materials is that the ratio of the chemical compositions Al₂O₃: CaO: ZrO₂ is 45.8~95.8%:2.5%~8.4%:0~50% according to the calculating in parts by mass;
(4) putting the mixture obtained in step (3) into a mold of a high-temperature device for hot-pressed molding and sintering, the highest temperature is 1550-1800 °C, and the strength of the hot-pressed sintering is 0.5-30 MPa.

The present application also provides a working lining of a ladle for molten steel smelting , which comprises the high-purity dense calcium hexa-aluminate system refractory material mentioned above or the high-purity dense calcium hexa-aluminate system refractory material prepared by the preparation method mentioned above.

The present application also provides a working lining for molten aluminum smelting and transporting ladles, which comprises the high purity dense calcium hexa-aluminate refractory material mentioned above or the high-purity dense calcium hexa-aluminate system refractory material prepared by the preparation method mentioned above.

The present application also provides a refractory lining for industrial furnaces, which comprises the high purity dense calcium hexa-aluminate refractory material mentioned above or the high-purity dense calcium hexa-aluminate system refractory material prepared by the preparation method mentioned above.

The high-purity dense calcium hexa-aluminate refractory material provided in this application is prepared by hot-pressed sintering of raw material fine powder without adding sintering agent. It has high chemical purity, dense structure, good uniformity and high thermal shock stability. It can not only give full play to the advantages of calcium hexa-aluminate refractory material in chemical composition, and clean molten steel, but also endow with excellent properties to resist the erosion of molten steel, which has remarkable economic and social economic benefits.

### Examples

This application provides a general and/or specific description of the materials and test methods used in the tests. In the following Examples, unless otherwise specified, % means wt%, i.e. percentage by weight. The reagents or instruments used, where the manufacturer is not indicated, are conventional reagent products that can be obtained through market purchase, among which, Table 1 shows the main raw materials and sources used in the Examples.

**Table 1**

| Raw materials | Main ingredients content | Manufacturers |
|---|---|---|
| CA6 fine powder | Al₂O₃ 90.5∼92.5% | ZiBo City LuZhong Refractory Co., Ltd |
| | CaO 7.4∼9.0% | |
| γ-Al₂O₃ fine powder | Al₂O₃≥96.0% | Shandong Aluminium Company |
| ρ-Al₂O₃ fine powder | Al₂O₃≥96.0% | Shandong Aluminium Company |
| Industrial alumina fine powder | Al₂O₃≥96.0% | Shandong Aluminium Company |
| Desiliconized zirconium fine powder | ZrO₂+H_{f}O₂≥91% | Shandong Jin Taiyang Zirconium Industry Co., Ltd |
| Fused zirconia fine powder | ZrO₂+H_{f}O₂≥98.5% | Shandong Jin Taiyang Zirconium Industry Co., Ltd |
| Monoclinic zirconia fine powder | ZrO₂+H_{f}O₂>98.5% | Shandong Jin Taiyang Zirconium Industry Co., Ltd |
| Active α-Al2O3 fine powder | Al₂O₃≥97.0% | Anmai Aluminium Industry(Qingdao)Co.,Ltd. |
| Tabular corundum powder | Al₂O₃≥97.0% | Anmai Aluminium Industry(Qingdao)Co.,Ltd. |
| Sub-white corundum fine powder | Al₂O₃≥96.0% | Luoyang Ruishi Company |
| Industrial alumina fine powder | Al₂O₃≥96.0% | Shandong Aluminium Company |
| Sintered corundum fine powder | Al₂O₃≥96.0% | Jiangsu Jinghui refractory material co., ltd |

The XRD method is used to analyze the phases of the refractory materials in each Example by grinding it to below 325 mesh and then scanning it with an X-ray diffractometer (Bruker: D8ADVANCE). By analyzing the diffraction data and matching it with the standard PDF card, the correlation phase is obtained, and then the content of the correlation phase is obtained by fitting the diffraction data.

The XRF method is used to determine the chemical composition of the refractory materials in each example according to GB/T21114-2007.

### Example 1

(1) 935g of industrial aluminum oxide powder and 115g of calcium hydroxide fine powder were mixed evenly to obtain a mixed material.
(2) 700g of the mixed material was taken out, and put into a high temperature device after pressing and molding, the temperature was raised to 1400°C, keeping for 1.5 hours, and the low-temperature pre-synthesis was performed.
(3) The pre-synthesized sample was crushed and ground to a particle size of ≤ 88µm, and then evenly mixed with the remaining mixed material of 350g, and put into a mold of a high-temperature device for hot-pressed sintering. When the temperature was raised to 1780°C, the pressure was applied and the strength of the hot-pressing sintering is up to 3MPa, a high-dense and high-purity calcium hexa aluminate refractory material was prepared.

The resulting refractory material was subjected to powder XRD analysis, that is, the measured refractory material was ground to less than 325 mesh, and then scanned by X-ray diffractometer (Bruker: D8 ADVANCE); by analyzing the diffraction data and matching it with the standard PDF card, the relevant phase was obtained; then, the content of the relevant phase was obtained by fitting the diffraction data, and the phase was mainly CA6. Based on the mass percentage of the phase of the measured refractory material, the content of CA6 was 100%.

The refractory material was analyzed by XRF in accordance with the standard and measured according to GB/T21114-2007, and based on the mass percentage of the refractory material, the refractory material comprised 90.3% of Al₂O₃, and 8.40% of CaO.

The refractory material was measured according to GB/T2997-2000, and the bulk density was 3.32 g/cm³.

### Example 2

(1) 400g of tabular alumina fine powder, 388g of aluminum hydroxide fine powder, and 110g of CaCO₃ fine powder were mixed evenly, and put into a high temperature device after pressing and molding, the temperature was raised to 1500°C, keeping 3 hours, and the low temperature pre-synthesis was performed.
(2) The pre-synthesized sample was crushed and ground to a particle size of ≤88µm, and then evenly mixed with 200g of α-Al₂O₃ fine powder and 100g of desiliconized zirconia fine powder to obtain a mixed material.
(3) The mixed material was put into a mold of a high-temperature device for hot-pressed sintering. When the temperature was raised to 1600°C, the pressure was applied. The pressure was increased while the temperature was increased. When the highest temperature was raised to 1740°C, and the strength of the hot-pressed sintering was up to 6MPa, a high-dense and high-purity calcium hexa-aluminate refractory material was prepared.

According to the same method as in Example 1, the phases obtained were mainly CA6, corundum and zirconia. Based on the mass percentage of the phase of the measured refractory material, the phase content of CA6 was 67.4%, the phase content of corundum was 17.5%, and the phase content of zirconia was 9.58%.

According to the same method as in Example 1, based on the mass percentage of the refractory material, the refractory material comprised 83.1% of Al₂O₃, 5.45% of CaO, and 9.65% of ZrO₂.

According to the same method as in Example 1, the bulk density was 3.15 g/cm³.

### Example 3

(1) 190g of CA fine powder, 400g of sub-white corundum powder, and 432g of ρ-Al₂O₃ powder were mixed evenly to prepare a mixed material.
(2) The mixed was casted and molded, and put into a high temperature device. The temperature was heated to 1550°C, keeping 1.5 hours, and the low-temperature pre-synthesis was perfomed.
(3) The pre-synthesized sample was crushed and ground to a particle size of ≤88µm, and put into a mold of a high-temperature device for hot-pressed sintering. When the temperature was raised to 1700°C, the pressure was applied, the strength of the hot-pressed sintering was up to 4MPa, the high-dense and high-purity calcium hexa-aluminate refractory material was prepared.

According to the same method as in Example 1, the phase is mainly CA6 and corundum. Based on the mass percentage of the phase of the measured refractory material, the phase content of CA6 was 78.2% and the phase content of corundum was 19.2%.

According to the same method as in Example 1, based on the mass percentage of the refractory material, the refractory material comprised 92.1% of Al₂O₃ and 6.43% of CaO .

According to the same method as in Example 1, the bulk density was 3.15g/cm³.

### Example 4

(1) 300g of active α-Al₂O₃ powder, 306g of γ-Al₂O₃ powder, and 58g of quicklime powder were mixed evenly, and put into a high temperature device after pressing and molding. The temperature was heated to 1500°C, keeping 3 hours, and the low temperature pre-synthesis was performed;
(2) the pre-synthesized sample was crushed, and ground to a particle size ≤88µm, and then mixed evenly with 350g of fused zirconia fine powder, to obtain a mixed powder;
(3) the mixed powder was put into a mold of a high-temperature device for hot-pressed sintering. As the temperature was increased, the pressure was gradually increased. When the highest temperature was raised to 1550°C, and the strength of the hot-pressed sintering was up to 30 MPa, a high-dense and high-purity calcium hexa-aluminate refractory was prepared.

Accordig to the same method as in Example 1, the phase is mainly CA6 and zirconia. Based on the mass percentage of the phase of the measured refractory material, the phase content of CA6 was 64.2% and the phase content of zirconia was 35.0%.

According to the same method as in Example 1, Based on the mass percentage of the refractory material, the refractory material comprised 59.54% of Al₂O₃, 5.24% of CaO, and 35% of ZrO₂.

According to the same method as in Example 1, the bulk density was 3.30 g/cm³.

### Example 5

(1) 201g of CA2 fine powder, 500g of dense corundum powder and 321g of ρ-Al₂O₃ powder were mixed evenly to obtain a mixed material.
(2) The mixed material was molded and dried, and put into a high temperature device, the temperature was heated to 1600 °C, keeping for 3.5 hours, and the low-temperature pre-synthesis was performed.
(3) The pre-synthesized sample was crushed and ground to a particle size of ≤88µm, and put into a mold of a high-temperature device for hot-pressed sintering. When the temperature was raised to 1600°C, the pressure was applied. The pressure was increased as the temperature was increased. When the highest temperature was raised to 1760°C, and the strength of the hot-pressed sintering wass up to 1 MPa, a high-dense and high-purity calcium hexa-aluminate refractory material was prepared.

According to the same method as in Example 1, the phase was mainly CA6 and corundum, and the phase content of CA6 was 48.8% and the phase content of corundum was 50% based on the mass percentage of the phase of the measured refractory material.

According to the same method as in Example 1, based on the mass percentage of the refractory material, the refractory material comprised 95.8% of Al₂O₃ and 3.84% of CaO.

According to the same method as in Example 1, the bulk density was 3.15g/cm³.

### Example 6

(1) 300g of active α-Al₂O₃ powder, 306g of γ-Al₂O₃ powder, 350g of white corundum powder, 80g of calcium hydroxide powder were mixed evenly, and put into a high temperature device after pressing and molding, the temperature was heated to 1500°C, keeping for 1 hour and the low temperature pre-synthesis was performed;
(2) the pre-synthesized sample was crushed and ground to a particle size of ≤88µm, and put into a mold of a high-temperature device for hot-pressed sintering. As the temperature rose, the pressure was gradually increased, and when the temperature was heated up to 1650°C and the strength of the hot-pressed sintering was up to 5 MPa, a high-dense and high-purity calcium hexa-aluminate refractory material was prepared.

According to the same method as in Example 1, the phase is mainly CA6 and corundum. Based on the mass percentage of the phase of the measured refractory material, the phase content of CA6 was 62.1% and the phase content of corundum was 35.0%.

According to the same method as in Example 1, the refractory material comprised 94.54% of Al₂O₃ and 5.13% of CaO based on the mass percentage of the refractory material.

According to the same method as in Example 1, the bulk density was 2.95g/cm³.

### Example 7

(1) 350g of CA6 powder, 200g of sintered corundum powder, 105g of ρ-Al₂O₃ powder and 350g of fused zirconia fine powder were mixed evenly to obtain a mixed material.
(2) The mixed material was put into a mold of a high-temperature device for hot-pressed sintering. When the temperature was raised to 1650°C, the pressure was applied. As the temperature was increased, the pressure was applied. When the highest temperature was raised to 1750°C, and the strength of the hot-pressed strength was up to 15 MPa, a high-dense and high-purity calcium hexa-aluminate refractory material was prepared.

According to the same method as in Example 1, the phase was mainly CA6, corundum and zirconia. Based on the mass percentage of the phase of the measured refractory material, the phase content of CA6 was 35%, the phase content of corundum was 28.9% and the phase content of zirconia was 35.0%.

According to the same method as in example 1, based on the mass percentage of the refractory material, the refractory material comprised 60.86% of Al₂O₃, 2.94% of CaO and 35% of ZrO₂.

According to the same method as in example 1, the bulk density was 3.45g/cm³.

### Example 8

(1) 700g of CA6 fine powder, 205g of ρ-Al₂O₃ powder, and 100g of monoclinic zirconia powder were mixed evenly to obtain a mixed material.
(2) The mixed material was put into a mold of a high-temperature device for hot-pressed sintering. The temperature was increased, the pressure was gradually increased. When the highest temperature was raised to 1600°C, and the strength of the hot-pressed sintering was up to 8 MPa, a high-dense and high-purity calcium hexa-aluminate refractory material was prepared.

According to the same method as in Example 1, the phase was mainly CA6, corundum and zirconia. Based on the mass percentage of the phase of the measured refractory material, the phase content of CA6 was 66.1%, the phase content of corundum was 18.4%, and the phase content of zirconia was 9.46%.

According to the same method as in Example 1, the refractory material comprised 84.12% of Al₂O₃, 5.88% of CaO, and 10% of ZrO₂ based on the mass percentage of the refractory material.

According to the same method as in Example 1, the bulk density was 2.90g/cm³.

### Example 9

(1) 260g of γ-Al₂O₃ powder, 200g of white corundum powder, 44g of quicklime powder were mixed, and put into a high temperature device after molding. The temperature was heated to 1550°C, keeping for 3 hours, and the low temperature pre-synthesis was performed.
(2) The pre-synthesized sample was crushed and ground to a particle size of ≤88µm, and then mixed with 500g of fused zirconia fine powder to obtain a mixed material.
(3) The mixed material was put into a mold of a high-temperature device for hot-pressed sintering. When the temperature was raised to 1500°C, the pressure was applied. The pressure was increased while the temperature was increased. When the highest temperature was up to 1600°C, and the strength of the hot-pressed sintering was up to 20 MPa, a high-dense and-high purity calcium hexa-aluminate refractory material was prepared.

According to the same method as in Example 1, the phase was mainly CA6, and the zirconia. Based on the mass percentage of the phase of the measured refractory material, the phase content of CA6 was 47.5% and the phase content of zirconia was 50%.

According to the same method as in Example 1, the refractory material comprised 45.8% of Al₂O₃, 3.99% of CaO, and 50% of ZrO₂ based on the mass percentage of the refractory material.

According to the same method as in Example 1, the bulk density was 3.30g/cm³.

### Example 10

(1) 300g of CA6 fine powder, 200g of Tabular corundum powder, and 500g of tetragonal zirconia powder were mixed well to obtain a mixed material.
(2) The mixed material was put into a mold of a high-temperature device for hot-pressed sintering. When the temperature was raised to 1800°C, the pressure was applied, and the strength of the hot-pressed strength was up to 0.5 MPa, a high-dense and high-purity calcium hexa-aluminate refractory material was prepared.

According to the same method as in Example 1, the phase was mainly CA6, corundum and zirconia. Based on the mass percentage of the phase of the measured refractory material, the phase content of CA6 was 30%, the phase content of corundum was 19.1%, and the phase content of zirconia was 50%.

According to the same method as in Example 1, based on the mass percentage of the refractory material, the refractory material comprised 46.3% of Al₂O₃, 2.52% of CaO and 50% of ZrO₂.

According to the same method as in Example 1, the bulk density was 3.65g/cm³.

### Example 11

(1) 446g of industrial aluminum oxide powder, 300g of tabular corundum powder, 115g of calcium hydroxide fine powder, and 214g of ρ-Al₂O₃ powder were mixed evenly to obtain a mixed material.
(2) The mixed material was put into a mold of a high-temperature device for hot-pressed sintering. When the temperature was raised to 1600°C, the pressure was applied, and the strength of the hot-pressed sintering was up to 3 MPa, a high-dense and high-purity calcium hexa-aluminate refractory was prepared.

According to the same method as in Example 1, the phase was mainly CA6 and corundum. Based on the mass percentage of the phase of the measured refractory material, the phase content of CA6 was 74.5% and the phase content of corundum was 15.5%.

According to the same method as in Example 1, the refractory material comprised 90.3% of Al₂O₃ and 8.36% of CaO based on the mass percentage of the refractory material.

According to the same method as in Example 1, the bulk density was 2.92g/cm³.

### Experimental Example Performance test of the refractory material

The corrosion resistance and thermal shock stability of the refractory materials obtained in the above Examples 1-11 and Comparative Examples were tested.

Wherein the refractory material of Comparative Example is obtained according to the method of Example 1 of CN107500747A.

In the following, the experiment will be described in detail with Example 1 and Example 2 as examples.

The samples with i15mm were drilled from the hot-pressed test blocks obtained in Examples 1-2 and Comparative Example as samples 1-3, respectively.

Sample 1, sample 2 and sample 3 were subjected to the material corrosion experiment in molten steel smelting under the same conditions, which was a dynamic rotation experiment. The experimental conditions were as follows: the temperature was 1600C, the sample was rotated 10 times per minute in the steel and slag, the slag composition is 51% CaO, 30% Al₂O₃, 11% SiO₂, and 8% MgO, and CaO/SiO₂ was 4.6.

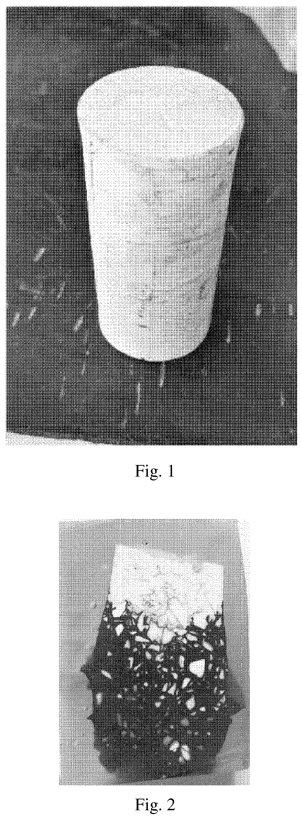

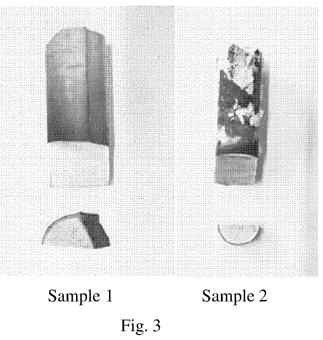

The above dynamic rotation experiment results show that sample 3 immersed in steel slag has completely collapsed when rotating for 8 minutes. Compared with sample 3, sample 1 and sample 2 did not change much. When they were taken out after continuous rotation for 15 minutes, the roundness of sample 1 and sample 2 was still very obvious, and the wettability and corrosiveness of molten steel and slag were very small, basically without much change. After measurement, the sample 1 was only damaged by about 0.5 mm and the sample 2 was also only damaged by 0.2 mm, so that they were basically not damaged, indicating that the erosion resistance of the sample of the Examples in this application was excellent. Fig. 2 was the residual sample of calcium hexaaluminate castable of sample 3 which collapsed in this experiment, and Fig. 3 is the picture of samples 1 and 2 in this application after the test.

Table 2 shows the relevant parameters, performance test results and evaluation of the Examples and Comparative Examples in this application

**Table 2**

| | Phase composition % | Chemical composition and content | Bulk density (g/cm³) | Corrosion resistance to slag (mm) | Thermal shock stability (times) | Ranking of cleaning steel | Ranking of cost performance and comprehensive performance |
|---|---|---|---|---|---|---|---|
| Example 1 | CA6: 100 | 90.3%Al₂O₃ | 3.25 | 0.5 mm | 12 | 2 | 1 |
| | | 8.40%CaO | | | | | |
| Example 2 | CA6: 67.4 | 83.1% Al₂O₃ | 3.15 | 0.2 mm | 13 | 6 | 2 |
| | Corundum:17.5 | 5.45%CaO | | | | | |
| | Zirconia:9.58 | 9.65%ZrO₂ | | | | | |
| Example 3 | CA6: 78.2 | 92.1%Al₂O₃ | 3.15 | 0.35 mm | 8 | 5 | 3 |
| | Corundum: 19.2 | 6.43%CaO | | | | | |
| Example 4 | CA6: 64.2 | 59.54%Al₂O₃ | 3.20 | trace | 14 | 4 | 4 |
| | Zirconia: 35.0 | 5.24%CaO | | | | | |
| | | 35.0%ZrO₂ | | | | | |
| Example 5 | CA6: 48.8 | 95.8%Al₂O₃ | 3.15 | 0.28 mm | 7 | 10 | 5 |
| | Corundum: 50.0 | 3.84%CaO | | | | | |
| Example 6 | Corundum: 35.0 | 94.54%Al₂O₃ | 2.95 | 0.85 mm | 10 | 9 | 6 |
| | | 5.13%CaO | | | | | |
| | CA6: 62.1 | | | | | | |
| Example 7 | CA6: 35.0 | 60.86%Al₂O₃ | 3.45 | No detection of damage | 4 | 11 | 7 |
| | Corundum:28.9 | 2.94%CaO | | | | | |
| | Zirconia:35.0 | 35% ZrO₂ | | | | | |
| Example 8 | CA6: 66.1 | 84.12%Al₂O₃ | 2.90 | 0.77 mm | 17 | 7 | 8 |
| | Corundum: 18.4 | 5.88%CaO | | | | | |
| | Zirconia:9.46 | 10%ZrO₂ | | | | | |
| Implementation Example 9 | CA₆: 47.5 | 45.8%Al₂O₃ | 3.30 | trace | 15 | 3 | 9 |
| | Zirconia:50.0 | 3.99%CaO | | | | | |
| | | 50%ZrO₂ | | | | | |
| Example 10 | Corundum: 19.1 | 46.3%Al₂O₃ | 3.65 | No detection of damage | 5 | 8 | 10 |
| | CA6: 30.0 | 2.52%CaO | | | | | |
| | Zirconia:50.0 | 50%ZrO₂ | | | | | |
| Example 11 | Corundum:15.5 | 90.3%Al₂O₃ | 2.92 | 1.28 mm | 16 | 1 | 11 |
| | CA6: 74.5 | 8.36%CaO | | | | | |
| Comparative Example | Corundum:24.2 | | 3.05 | Collapsed in 8 min | 15 | 12 | 12 |
| | CA6: 69.1 | 92.11%Al₂O₃ | | | | | |
| | CA:2.3 | 7.02%CaO | | | | | |
| | CA2:2.31 | | | | | | |

For refractory materials, their application and performance evaluation are not only related to their slag erosion resistance, but also need to consider the thermal shock stability of refractory materials under the condition of rapid cooling and rapid heating; if the thermal shock stability is not good, cracks may appear in use, which affects the use performance of the material. In addition, it is also necessary to consider the cost performance of refractory materials, such as the resistance to slag erosion and thermal shock stability of refractory materials with the addition of zirconia are very good, and in the case of a large amount of addition, its performance is also better, but zirconia is more expensive, therefore, for the Examples of this application, its performance is the result of comprehensive comparison.

The above is only the specific embodiment of this application, but the scope of protection of this application is not limited to this, and any modification, equivalent replacement and improvement made by any technical person familiar with the technical field within the technical scope disclosed by the invention and within the spirit and principles of this application shall be covered by the scope of protection of this application.

## Claims

1. A high-purity dense calcium hexa-aluminate system refractory material, wherein the phase of the refractory material comprises CA6 and one or two selected from corundum and zirconia.

2. The refractory material according to claim 1, wherein based on the percentage of the total mass of the refractory material, the total phase content of CA6 and one or two selected from corundum and zirconia is ≥90 %; preferably
the phase content of CA6 is 30-100%, preferably 35-100%;
the phase content of corundum is 0-50%, preferably 0-35%; and
the phase content of zirconia is 0-50%, preferably 0-35%.

3. The refractory material according to claim 1 or 2, wherein based on the percentage of the total mass of the refractory material, the content of the sintering-promoting component in the refractory material is ≤1.5%, preferably ≤1.0%.

4. The refractory material according to any one of claims 1-3, wherein the chemical composition of the refractory material comprises Al₂O₃, CaO and ZrO₂, and based on the percentage of the total mass of the refractory material, the Al₂O₃ is 45.8-95.8%, preferably 59.54-94.54%; the CaO is 2.52-8.40%, preferably 2.94-8.40%; and the ZrO₂ is 0-50%, preferably 0-35%.

5. The refractory material according to any one of claims 1-4, wherein the bulk density of the refractory material is 2.90-3.65 g/cm³, preferably 2.90-3.45 g/cm³, more preferably 2.95-3.30 g/cm³.

6. The refractory material according to any one of claims 1-5, wherein the refractory material is prepared by a method comprising the following steps:
mixing related fine powders to obtain a mixed material, then subjecting the mixed material to hot-pressed sintering to obtain the refractory material.

7. The refractory material according to claim 6, wherein the mass ratio of the fine powder in the mixture is 100%.

8. The refractory material according to any one of claims 6-7, wherein the fine powder comprises Al₂O₃-CaO system fine powder and ZrO₂-containing fine powder, preferably based on the percentage of the total mass of the fine powder, the Al₂O₃-CaO system fine powder is 50-100%, and the ZrO₂-containing fine powder is 0-50%;
preferably the Al₂O₃-CaO system fine powder is selected from: CA6 fine powder containing CaO fine powder, or a mixed powder of CaO-containing fine powder and Al₂O₃-containing fine powder;
preferably the Al₂O₃-containing fine powder is one or two or more selected from the group consisting of: active α-Al₂O₃ fine powder, γ-Al₂O₃ fine powder, ρ-Al₂O₃ fine powder, aluminum hydroxide fine powder, industrial alumina fine powder, white corundum fine powder, sub-white corundum fine powder, sintered corundum fine powder, and tabular corundum fine powder;
preferably the CaO-containing fine powder is one or two or more selected from the group consisting of: quicklime fine powder, limestone fine powder, calcium hydroxide fine powder, CA fine powder, CA2 fine powder, C12A7 fine powder, and CA6 fine powder;
preferably the ZrO₂-containing fine powder is one or two or more selected from the group consisting of: monoclinic zirconia fine powder, tetragonal zirconia fine powder, desiliconized zirconium fine powder, and fused zirconia fine powder.

9. The refractory material according to any one of claims 6-8, wherein the particle size of the fine powder is ≤0.088mm.

10. The refractory material according to any one of claims 6-9, wherein the hot-pressed sintering is performed by
putting the mixed material into a mold of a high temperature device for hot-pressed sintering; or
pre-sintering the mixed material at low temperature, and then putting it into a mold of a high temperature device for hot-pressed sintering; or
mixing part of the materials to pre-sinter the mixture at low temperature, then crushing it to mix well with the other remaining material to obtain a mixed material, and then putting the mixed material into a mold of a high temperature device for hot-pressed sintering.

11. The refractory material according to claim 10, wherein the temperature of the hot-pressed sintering is 1550-1800°C; preferably the strength of the hot-pressed sintering is 0.5-30 MPa.

12. A preparation method for high-purity dense calcium hexa-aluminate system refractory material, comprising the following steps:
mixing related fine powders to obtain a mixed material, then subjecting the mixed material to hot-pressed sintering to obtain the refractory material.

13. The preparation method according to claim 12, wherein the mass ratio of the fine powder in the mixture is 100%.

14. The preparation method according to claims 12-13, wherein the fine powder comprises Al₂O₃-CaO system fine powder and ZrO₂-containing fine powder, preferably based on the percentage of the total mass of the fine powder, the Al₂O₃-CaO system fine powder is 50-100%, and the ZrO₂-containing fine powder is 0-50%;
preferably the Al₂O₃-CaO system fine powder is selected from: CA6 fine powder containing CaO fine powder, or a mixed powder of CaO-containing fine powder and Al₂O₃-containing fine powder;
preferably the Al₂O₃-containing fine powder is one or two or more selected from the group consisting of: active α-Al₂O₃ fine powder, γ-Al₂O₃ fine powder, ρ-Al₂O₃ fine powder, aluminum hydroxide fine powder, industrial alumina fine powder, white corundum fine powder, sub-white corundum fine powder, sintered corundum fine powder, and tabular corundum fine powder;
preferably the CaO-containing fine powder is one or two or more selected from the group consisting of: quicklime fine powder, limestone fine powder, calcium hydroxide fine powder, CA fine powder, CA2 fine powder, C12A7 fine powder, and CA6 fine powder;
preferably the ZrO₂-containing fine powder is one or two or more selected from the group consisting of: monoclinic zirconia fine powder, tetragonal zirconia fine powder, desiliconized zirconium fine powder, and fused zirconia fine powder.

15. The preparation method according to any one of claims 12-14, wherein the particle size of the fine powder is ≤0.088mm.

16. The preparation method according to any one of claims 12-15, wherein the hot-pressed sintering is performed by
putting the mixed material into a mold of a high temperature device for hot-pressed sintering; or
pre-sintering the mixed material at low temperature, and then putting it into a mold of a high temperature device for hot-pressed sintering; or
mixing part of the materials to pre-sinter the mixture at low temperature, then crushing it to mix well with the other remaining material to obtain a mixed material, and then putting the mixed material into a mold of a high temperature device for hot-pressed sintering.

17. The preparation method according to claim 16, wherein the temperature of the hot-pressed sintering is 1550-1800°C; preferably the strength of the hot-pressed sintering is 0.5-30 MPa.

18. A working lining of a ladle for molten steel smelting, wherein it comprises the refractory material according to any one of claims 1-11 or the refractory material prepared by the preparation method according to any one of claims 12-17.

19. A working lining for molten aluminum smelting and transporting ladles, wherein it comprises the refractory material according to any one of claims 1-11 or the refractory material prepared by the preparation method according to any one of claims 12-17.

20. A refractory lining for industrial furnaces, wherein it comprises the refractory material according to any one of claims 1-11 or the refractory material prepared by the preparation method according to any one of claims 12-17.
